Europäisches Patentamt

European Patent Office

Office européen des brevets

(11) Publication number: 0 385 771
A2

# EUROPEAN PATENT APPLICATION

(21) Application number: 90302177.2

(22) Date of filing: 01.03.90

(51) Int. Cl.5: C09D 5/00, C09D 7/12, G09F 3/02

(30) Priority: 02.03.89 US 318109

(43) Date of publication of application:
05.09.90 Bulletin 90/36

(84) Designated Contracting States:
AT BE CH DE DK ES FR GB GR IT LI LU NL SE

(71) Applicant: DIXONWEB PRINTING CO.
1226 West Seventh Street,
Dixon, Illinois 61021(US)

(72) Inventor: Dahlquist, Ake L.
874 White Oake Drive
Dixon, Illinois 61021(US)
Inventor: Fellows, Thomas C.
1901 Harward Boulevard
Dayton, Ohio 45406(US)

(74) Representative: Prutton, Roger et al
MARKS & CLERK Alpha Tower Suffolk Street
Queensway
Birmingham B1 1TT(GB)

(54) Opaque abrasive removable fragrance releasing composition, coating and article.

(57) An opaque, abrasive removable fragrance releasing composition, coating and article are provided. A method of releasing a fragrance while revealing a message is also provided. The composition can be a dispersion containing opaque particulate material, rupturable microcapsules containing a fragrant material, a binder for adhering the opaque particulate material and the microcapsules when the composition is applied to and dried on the substrate, and a solvent compatible with these materials. The composition is applied on a message-bearing article to conceal at least a portion of the message, forming a coating. When the coating is abrasively removed with a coin, finger or the like, some of the microcapsules are ruptured to release the fragrant material and the coating is removed from the substrate to reveal the concealed message.

FIG 1

## OPAQUE ABRASIVE REMOVABLE FRAGRANCE RELEASING COMPOSITION, COATING AND ARTICLE

### FIELD OF THE INVENTION

This invention relates to an opaque, abrasive removable fragrance releasing coating on a substrate. More particularly, the coating can be used to conceal at least a portion of a message on the substrate. When the coating is abraded to reveal the message, a fragrance is also released.

### BACKGROUND OF THE INVENTION

Various marketing devices which encourage consumer participation have been developed in recent years. Two types of these devices have involved consumer handling. Usually, the devices are embodied and distributed in advertisements, game cards, premium cards or the like. Consumer attention therefore is focused, illustratively, on the advertisement for a product because of this handling, thereby increasing consumer awareness of the advertised product.

One type of marketing device involves concealing a message under a layer of opaque coating. Elsewhere in the advertisement, the consumer is typically told that certain information of interest to the consumer, such as a coupon value or possible winning number, is concealed under the opaque coating. A consumer's interest may be heightened, even if he was not previously interested in the products being advertised, because he is curious as to what information is being concealed.

The consumer must abrade or scratch-off the layer of opaque coating material, typically with a fingernail, coin or the like to reveal the concealed information.

The opaque coating is typically made from a latex base or dispersion binder composition. Once the opaque composition is applied over the message, it is dried to form the coating.

A second type of marketing device by which consumer participation is encouraged involves the use of fragrance-releasing microcapsules, commonly known and utilized as scratch and sniff coatings. The microcapsules typically have rupturable outer walls with a fragrant or aromatic material encapsulated therein. When the consumer runs an object, such as a fingernail, coin or the like, over this coating, a plurality of these microcapsules may be ruptured, releasing the encapsulated material to provide the desired fragrance, but the coating is not removed by such scratching.

The scratch and sniff coating is transparent or semi-transparent and consists of microcapsules that are adhered to a substrate with an adhesive.

When the micro0capsules are ruptured, a desired fragrance is released. A variation of the scratch and sniff coating is composed of microencapsulated materials adhesively secured between two temporarily adhered coated paper surfaces such that upon separation of the two surfaces, the capsules are ruptured, releasing the fragrance contained therein.

Microencapsulated fragrant material is produced by, for example, encapsulating microdroplets of water insoluble fragrant oils in water insoluble shells derived from water soluble aminoplast prepolymers. The formed microcapsules are placed in a composition including an adhesive binder to adhere the microcapsules to the substrate.

A need exists for a removable coating that is suitable for concealing certain information, while providing a desired aroma or fragrance during removal.

A need exists also for a coating and resulting article that heightens consumer curiosity by concealing from them certain information while at the same time providing them with a desired fragrance, such as an indication of a product's fragrance or smell.

### SUMMARY OF THE INVENTION

In accordance with the present invention, a novel composition for forming an opaque, abrasive removable fragrance releasing coating, the resultant novel coating and a novel article having the coating is provided. The composition can be applied over an indicia-bearing article to conceal at least a portion of the indicia and dried to form a coating. When the coating is abraded such as by abrasively rubbing it with a coin, fingernail or the like, or erased with an eraser, a fragrant material is released and the coating is removed, thereby revealing a concealed printed message or messages.

In accordance with one aspect of the invention, a composition for forming an opaque, abrasive removable fragrance releasing coating on the substrate is provided. The composition may be in the form of a dispersion and contains opaque particulate material, microcapsules composed of a rupturable capsule wall having a fragrant material contained therein, a binder material for removably adhering the opaque particulate material and the microcapsules to the substrate when the composition is applied with a solvent or carrier to a substrate and then dried or cured to produce the resultant coating. The solvent or carrier for the binder is compatible with both the opaque particulate material and the microcapsules for allowing the composition to be applied over a substrate and dried or cured to produce a coating. The solvent or carrier should evaporate or otherwise cause the composition to dry or cure to provide the resultant coating which is composed of a solid binder having the opaque particles and microcapsules dispersed therein. Preferably, the opaque particulate material and the microcapsules are substantially uniformly dispersed within the binder.

The opaque particulate material can be any of such materials as are typically used to form opaque coatings, as long as such opaque material does not produce any substantial adverse effect on the microcapsules, the substrate or otherwise, so as to make use of such opaque material impractical. Suitable opaque materials include, but are not limited to, carbon black, aluminum powder, brass powder, copper powder, microsized nylon particles, or any mixture of these materials.

The microcapsules contain the fragrant material, which may be a water insoluble material, such as any of the known essential fragrance oils.

The walls of the microcapsules may be cross-linked polymers or resins. Typical materials for forming the capsule walls include materials such as aminoplast prepolymers, urea-aldehyde prepolymers, melamine resins, epoxy resins, thiourea resins, polyamide resins, dicyanodiamide-aldehyde resins, or mixtures thereof.

Usually, the average size of the microcapsules is in the range of 5 to 20 micrometers. The microcapsules can be present in the coating forming composition in the range of 5% to 70%, preferably 10% to 25%, by weight of the total coating forming composition.

The binder may be composed of any suitable material that provides an abrasive removable coating that can be removed by scratching with a coin or a fingernail. Such binders are known in the art. The binder may be composed of, but not limited to, waxes, elastomers and polymers, such as polyethylene. Specific binders that can be used include rubber which may be natural and preferably synthetic rubber, and latex material. The binder composition may also include plasticizers, surfactants, clays and talc. The solvent can be either non-polar or polar, inorganic or organic, such as hydrocarbon solvents, for example. The solvent should be suitable for acting as a solvent or carrier for the binder and should not dissolve the microcapsules.

In accordance with another aspect of the invention, an opaque, abrasive removable coating on a substrate that releases a fragrance when removed is provided. The coating is formed by applying the coating forming composition over a substrate, which can be paper, cardboard or nearly any surface to which the composition will adhere, at a desired thickness, usually greater than the diameter of the microcapsules or most of the microcapsules to insure an opaque coating, and allowing the coating to dry or cure on the substrate to provide the resultant coating which can be removed by abrasion, such as by scratching with a fingernail or coin, for example. The opaque material is present in the composition in sufficient amount to provide a desired degree of opacity.

Preferably, the coating has a thickness of at least, and preferably greater than, one and one-half times the average diameter of the microcapsules for microcapsules having a relatively uniform size. The average diameter of the microcapsules is preferably in the range of 5 to 20 micrometers.

In accordance with another aspect of the invention, an article is provided having on at least a portion of the article surface the opaque, abrasive removable fragrance release coating as previously described. The article may include an indicia bearing surface with the coating discussed above being applied thereon over at least a portion of the indicia.

In accordance with another aspect of the invention, a method for making an article with an opaque, abrasive removable fragrance releasing coating is provided. The method includes encapsulating fragrant material in microcapsules by forming a suspension in an aqueous medium of the fragrant material and compounds capable of forming cross-linked resins and forming a rupturable shell of cross-linked material around the fragrant material and thereafter separating the microcapsules from the aqueous medium. The coating forming composition is formed from a mixture of the separated microcapsules, opaque particulate material, a binder material and a solvent. The second coating forming composition should be mixed in a manner to avoid rupturing the microcapsules.

The encapsulating step may be carried out by either an interfacial deposition or interfacial polycondensation process. Preferably, the fragrant material is dispersed in an aqueous solution to an average droplet size in the range of one micrometer to two thousand micrometers, preferably five to twenty micrometers.

In accordance with another aspect of the invention, a method of releasing a fragrance while revealing a message is provided. An opaque, abrasive removable fragrance releasing coating as described is provided over at least a portion of a message on a substrate. The coating is abraded to remove at least a portion of the coating from the substrate to reveal the messages, while rupturing at least some of the microcapsule walls to release the fragrance.

In accordance with still another aspect of the invention, a method for producing an indicia-bearing article with at least a portion of the indicia being concealed by an opaque, abrasive removable fragrance releasing coating is provided. A composition is applied over the indicia containing opaque particulate material, microcapsules having fragrant material contained therein, a binder and a solvent. The solvent is then evaporated from the composition after application to the article which can be done in an oven, for example.

The composition can be applied in a thin layer to a printed web of indicia-bearing articles, such as paper. The solvent is evaporated before the individual articles or units are formed and cut into cards, pamphlets, brochures or the like, from the web.

Other objects and the advantages of the invention will become apparent upon reading the following detailed description with reference to the drawings. Throughout the drawings, like reference numerals refer to like parts.

## BRIEF DESCRIPTION OF THE DRAWINGS

FIG. 1 is a schematic fragmentary elevation view of one embodiment of the invention;

FIG. 2 is a perspective partial view of an indicia-bearing article; and

FIG. 3 is a perspective partial view of the indicia-bearing article of FIG. 2 after the coating over the indicia has been removed.

## DETAILED DESCRIPTION OF THE PREFERRED EMBODIMENTS

An opaque, abrasive removable fragrance releasing composition, coating and article are provided. The composition is a dispersion containing opaque particulate material, microcapsules containing a fragrant material, a binder for adhering the opaque particulate material and the microcapsules when the composition is applied to and dried on the substrate, and a solvent or carrier for the binder. As used herein, "solvent" includes the continuous or external phase of a dispersion, a carrier or a true solvent, for the binder. The composition can be applied on the surface of an article, such as on a message bearing article, for example, to conceal at least a portion of the message. A resultant coating is formed when the solvent is evaporated or when the coating otherwise cures. When the coating is abrasively removed, the coating is removed from the substrate to reveal the concealed message, and at least a portion of the microcapsules are ruptured to release the fragrant material.

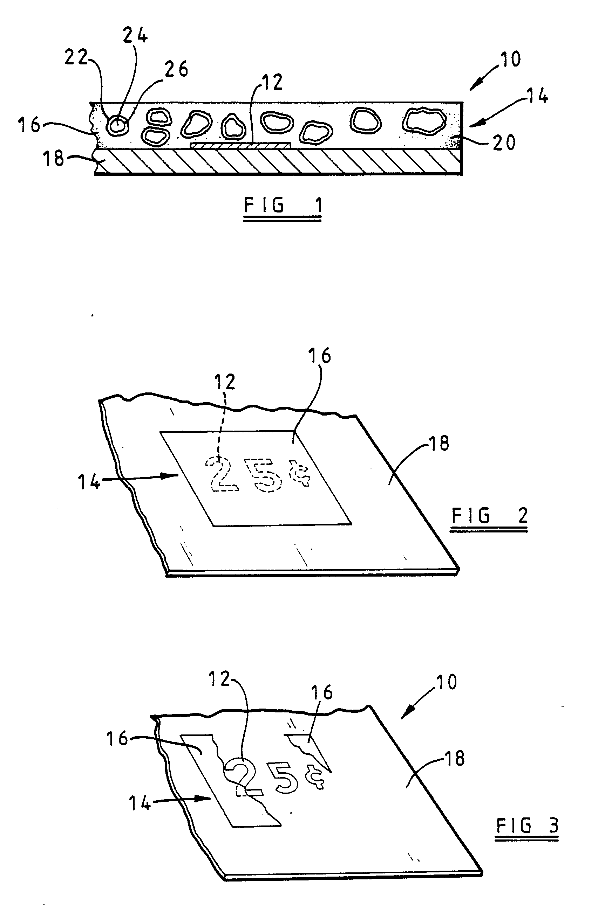

As shown generally in FIGS. 1-3, an article 10 having a message or indicia 12 appearing thereon is illustrated. As used herein the term "message" is used in a broad sense and means any symbol, number, letter, or any combinations that can be applied in some manner, such as by any type of printing, writing, lithography, silk-screening, or some other process, to a surface. Usually, the surface will be the surface of a substrate or sheet of material.

Article 10 can be an advertisement, game card, premium card, or the like. Illustratively, article 10 is composed of a substrate 18, which can be a portion of a magazine page, for example, and message 12 is a coupon value towards purchase of a consumer product having a desired fragrance, such as a brand of perfume or air freshener, for example. Article 10 could also be devoid of any message 12 or other indicia where the coating would be used to cover at least a portion of the article surface. An abrasive removable fragrance releasing coating 14 is formed on a portion of article 10 to conceal at least a portion of message 12. As shown in FIG. 2, coating 14 completely covers message 12.

Coating 14 is made of a binder 16 that forms at least a substantially continuous solid phase that adheres to substrate 18 of article 10. Binder 16 contains opaque particulate material 20 dispersed therein and a plurality of microcapsules 22 also being dispersed in binder 16. Microcapsules 22 have a rupturable wall or shell 24 encapsulating a fragrant material 26 therein. Shell or wall 24 may actually consist of a plurality of shell walls. Coating 14 is abrasively removable from substrate 18 when a coin, fingernail or the like is rubbed against it. As illustrated in FIG. 3, the message 12 is revealed when a sufficient amount of coating 14 has been abrasively removed. While the coating 14 is being abrasively removed, some of the rupturable walls 24 of microcapsules 22 are ruptured to release fragrant material 26. As used herein, fragrant material 26 is any volatile component or mixture of components having a fragrance or a desired fragrance.

A composition for forming opaque, abrasive removable fragrance releasing coating 14 on the substrate 18 will now be described. The composition contains opaque particulate material 20, microcapsules 22 which have a rupturable capsule wall 24 encapsulating a fragrant material 26 therein, binder material 16 for removably adhering opaque particulate material 20 and microcapsules 22 when the composition is applied to and dried or cured on substrate 18, and a solvent in which the microcapsules 22 are insoluble or substantially insoluble. The solvent is evaporated after application of the composition to the substrate. Opaque particulate material 20 and microcapsules 22 are preferably uniformly dispersed within binder 16.

Microcapsules 22 have a rupturable shell wall 24 encapsulating a material that provides a desired fragrance when wall 24 is ruptured.

Microencapsulation processes and methods are well known and any suitable technique can be used in accordance with the invention. Microcapsules can be formed to be rupturable by any one or more means, such as pressure, heat or radiation, to release the encapsulated materials. The encapsulated material can include physically observable materials, such as ink, fragrance or odor releasing materials, chemically active materials, and the like. In the present invention, a fragrant material is encapsulated to contain and deliver a fragrance when the shell wall is ruptured.

The microencapsulation processes useful in the present invention provide for the coating of micro-droplets of fragrance slurry or scented oily liquid with a wall formed from water soluble film-forming polymeric materials. The water soluble film-forming polymeric materials which contain the fragrance slurry micro-droplets are of a sufficient physical nature to carry and protect the micro-droplets from environmental contaminants and to act in preventing the miscibility between the micro-droplets and the solvent used in the composition, yet are rupturable so that the fragrance can be released to the atmosphere under certain conditions, such as by scratching with a coin or fingernail.

Microencapsulation processes useful for such encapsulation are interfacial deposition, interfacial polycondensation, interfacial polymerization, complex coacervation, simple coacervation, in-situ polymerization, and physical methods for encapsulation such as pan coating, dip coating and extrusion, to name a few. The use of interfacial deposition or interfacial polycondensation and particularly interfacial polycondensation microencapsulation procedures are preferable.

It ie apparent from the foregoing discussion that "encapsulation" and "encapsulate" refers to the formation of solid shells or walls around the dispersed micro-droplets of water insoluble fragrant material such as essential fragrance oils. More specifically, the water insoluble fragrant material can be encapsulated in solid shells of cross-linked resins, either synthetic or natural. These encapsulating cross-linked resin shells, as is known, are water insoluble and are insoluble in organic solvents. In order to encapsulate the water insoluble organic liquid in the cross-linked resin shells, the water insoluble organic liquid fragrance slurry is dispersed in an aqueous solution of compounds capable of forming cross-linked resins by the application of heat or catalyst or both, and then the resin forming compounds are polymerized in the presence of the dispersed water insoluble liquids to thereby encapsulate them. Urea-aldehyde prepolymers, also referenced as aminoplast prepolymers, are especially suitable for use in such a process. However, water soluble resins forming prepolymer compounds capable of forming melamine, epoxy, thiourea, polyamide, dicyanodiamide-aldehyde resins, or mixtures thereof are also suitable.

The water insoluble fragrant materials can be encapsulated in a plurality of concentric shells made of the same or different aminoplast prepolymer compounds or in a composite shell composed of a plurality of aminoplast prepolymer compounds.

The fragrant material is dispersed in the aqueous solution of the water soluble prepolymers to a predetermined droplet size of from one micrometer to two thousand micrometers and more preferably, to a droplet size of about five to twenty micrometers. The fragrant material may be composed of essential scented oils, such as lemon, lime, strawberry and the like.

Generally, the process of producing the microcapsules includes phase separation where the fragrant material, which is the minor phase, is dispersed as microdroplets into the major liquid phase. The major liquid phase contains, for example, the urea-formaldehyde or melamine/formaldehyde in solution form. The prepolymers are condensed or deposited on the surface of the microdroplet of the fragrant material and polymerized to form a ridged polymeric composition. The resulting encapsulating composition provides a protective barrier for the fragrant material, which is a hard but rupturable microcontainer for the fragrant material until it is ruptured. The microencapsulating processes and procedures are also described in various United States Patents, such as No. 3,516,941; No. 4,720,417; No. 4,720,409; and No. 4,493,869.

One manner of forming microencapsulated fragrance material in accordance with the invention will now be described. A dilute suspension of the fragrance slurry is first formed in an aqueous acidic solution, having a pH of from 1.2 to 5.5, of the water soluble urea-formaldehyde prepolymer. The urea-formaldehyde prepolymer forms a precondensate resinous continuous film at the interface of the fragranced oil droplet and is both ridged and friable. The friable nature of the continuous resinous wall composition entrapping, containing and forming the resinous shell around the micro-droplet protects the fragrance slurry from external environmental contaminants and is easily broken or ruptured under controlled pressure which allows for the release of the encapsulated fragrance.

If desired, the dispersion of the water insoluble organic liquid in the aqueous media may be facilitated by using a water soluble thickening agent, or an agent imparting colloidality to the media. Compounds found very useful as thickening agents include methyl cellulose, hydroxyethyl cellulose and sodium carboxymethyl cellulose and similar compounds known to improve the suspending capacity of aqueous media. Although these colloids are water soluble, they also have some affinity for the water insoluble organic liquid. Thus, these colloids facilitate the formation of an aqueous dispersion of the essential fragrance oil and have a tendency to concentrate at the interface between the dispersed water insoluble organic liquid and the continuous aqueous phase. In this way, the encapsulation is aided.

A specific example of forming a microencapsulated fragrance will now be described. A fragrance slurry composition of 30 grams of menthol, 10 grams of camphor, and 10 grams of bornyl acetate was stirred and dispersed in 50 grams of 10% methylcellulose (15 centipoises) in water. Fifty grams of an aqueous acidic colloidal solution having a pH from 1.2 to 5.8 and containing from 10% to 30% and preferably 10% of an urea-forming-aldehyde prepolymer, was added to this dispersion. After stirring at room temperature for one-half hour, the temperature of the mixture was taken to 50 degrees centigrade and held for an hour stirring continuously. Heating was then discontinued and the process was allowed to come to room temperature. At room temperature the resulting suspension of microcapsules may be washed free of mother liquid and dried. This preparation can be made odor free by air drying the filtered, or centrifuged, capsules overnight in an oven kept at 50 to 60 degrees centigrade.

The resulting microcapsules are spherical in shape containing from 50% to 99.5% by weight of the essential fragrance oil and more preferably from 95 to 98% by weight of the essential fragrance oil. Usually the diameter of the microcapsules for use in accordance with the invention is the range of about 5 to 20 microns, and preferably, in the range of about 10 to about 20 micrometers, and preferably, in the range of about 10 to about 20 micrometers. The degree of capsule friability or rupture strength to be between about 1 and about 200 g/cm at 20 degrees centigrade and 50% RH and more preferably between about 10 and about 30 g/cm.

After being formed, the microcapsules are separated from the composition and mixed with the opaque particulate material, the binder and the solvent.

The opaque particulate material, binder and solvent are commercially available from a number of suppliers who each sell differently formulated materials. Scratch-off coating materials (binder, opaque particulate material and solvent) such as SC3900H from Electromek of Carstadt, New Jersey; DG4323D from Doimo Coatings, of Patterson, New Jersey; and Craigseal® 2700 LM (gold) from Craig Adhesives Co. of Newark, New Jersey, for example, are useable. Some materials will work better than others depending on the weight, finish and grade of paper or other material to which the composition is to be applied. For example, some paper will be more porous than other types of paper and paper will otherwise have different coating characteristics from paper to paper. The aforementioned scratch-off coating materials may include synthetic rubber or natural rubber binders, and preferably, synthetic rubber.

A binder is chosen from one or more suitable materials. Suitable binder materials are waxes and polymers, which may be natural or synthetic. Specific examples of types of binder materials that can be used include natural and preferably synthetic rubber, styrene-butadiene rubbers, polyethylenes, styrene block polymers, vinyl polymers, elastomers and latexes. The binder material should cohesively adhere to the substrate with marginal mechanical adhesion to permit removal of the binder material from the substrate by scratching with a fingernail. Generally, the amount of binder material in the coating forming composition should be minimized to avoid obtaining more than marginal mechanical adhesion. The composition of the binder component, in addition to the binder material and the opaque particulate material, may also include plasticizers, surfactants, clays, talc and other such fillers and/or pigments carried in a solvent which may be mineral spirits, depending on the type of binder material.

To the binder is added an opaque particulate material. Materials for pigmenting purposes include but are not restricted to aluminum powder, brass powder, copper powder, synthetics such as micronized pigmented nylon particles as well as the more traditionally used pigments.

The solvent must be chosen so that the microcapsules are at least substantially insoluble in the solvent. Otherwise, the solvent will dissolve the microcapsule walls and the microcapsules premature release of the fragrant material occurs. The preferred solvents are hydrocarbon solvents, and more generally non-polar solvents for use with polymetric and elastometric type binders. For both types of binder, a preferred solvent is mineral spirits.

Adjustment in viscosity to the composition can be accomplished using mineral spirits as a solvent for both types of binder, and 0.005% Triton X-100 wetting agent to give a preferred viscosity of 20 seconds to 25 seconds as measured using a number 3 Zhan cup.

By mechanical and/or chemical mixing of the opaque particulate material, the microcapsules, binder and solvent, the composition is obtained. The microcapsules are added in an amount of from about 5% to about 70% by weight of the total composition, and more preferably at from 10% to 25% by composition weight. For example, a mixture of 75% scratch-off coating material with 25% of encapsulated fragrance material by volume, and of a viscosity of 20 seconds in a number 5 Zhan cup at 75-90 degrees Fahrenheit has been found to produce the best result on coated ground wood free paper in a weight range of 55 to 80 pounds.

As an example, to a commercially available scratch-off coating identified as a Craigseal® scratch-off coating was added under stirring, 25% by weight of a urea-formaldehyde encapsulated cherry scent. Fifteen percent by weight of mineral spirits was added to adjust the viscosity of the scratch-off fragrance releasing coating forming composition to 20 seconds measured with a number 5 Zhan cup. Three milliliters of Triton X-100 and 1 milliliter of Surfynol 440 was added per pound of binder to aid wetting and leveling.

After the composition is formed, the material is applied by preshaped pad or pads adhered to a cylinder which circumference including two thicknesses of the pads added to the diameter equal the repeat spacing of the product or group of products being produced. In this way, the composition or material is applied to a continuously-running web of paper or other substrate. Such an application unit normally contains a pan roller system with a material circulation system. Material on the pan roller, normally having variable speed capacities is metered and transferred to another roller having full repeat length circumference. This transfer roller conveys the composition or material to preshaped pads on another roller by contact. The composition or material is transferred to the pads at every revolution of the cylinders having a circumference of full-image repeat length transferred from the pad onto the paper or other substrates. Each repeat length or cylinder circumference can represent from one to many equal or different products. A printed message such as a coupon value or codes is applied to the paper or substrate prior to the application of the composition which after being applied and dried becomes an opaque coating, concealing the printed message.

The composition is typically applied to the article to form a coating usually thicker than the diameter of the microcapsules or most of the microcapsules to insure an opaque coating, preferably a thickness in the range of 10 to 40 micrometers. A coating having a thickness of about or greater than, 1-1/2 times the average diameter of the microcapsules is preferred, and typically about 1-1/2 times.

After application, the composition is dried by evaporation of the solvent. This may be done in a dryer or an oven, typically at a temperature in the range of from about 250°F to about 450°F, for one to one and a half seconds or longer to facilitate the evaporation, depending on the solvent evaporation rate and coating thickness. The required drying time and temperature will depend on the specific solvent, binder, coating thickness and substrate that is utilized. After the solvent has evaporated sufficiently to permit further processing, the various articles 10 can be cut and shaped out of the continuous web.

Article 10 can be of paper or other material. It can be two pages or any multiple thereof, such as four pages, six pages or so on, with the coated area being of various shapes and sizes, none or several coated areas on each page, Further, there may be several fragrances on the same article. Size and format of an article or product can be infinitely varied from a few square inches or less to several square feet or more. Each article 10 can be folded, die cut, perforated, numbered, barcoded, glued, cut and the like, into various configurations.

Coating 14 is abrasively removable. Once coating 14 is formed and dried or cured over message 12, coating 14 can be abraded to remove at least a portion of coating 14 from the substrate to reveal message 12. While coating 14 is being abraded, at least some of microcapsules 22 are ruptured to release the fragrance.

As used herein, "abrasive removable coatings" means that the coating can be removed from a substrate to which the coating adheres by scratching with the fingernail of a person or erased by an eraser.

While the invention is described in connection with several preferred embodiments, it will be understood that it is not intended to limit the invention to these embodiments. On the contrary, it is intended to cover all alternatives, modifications, similarities and equivalents as may be included in the spirit and scope of this invention as defined by the appended claims.

## Claims

1. A composition for forming an opaque, abrasive removable fragrance releasing coating on a substrate, comprising a dispersion containing:

(a) opaque particulate material;

(b) microcapsules composed of a rupturable capsule wall having a fragrant material contained therein;

(c) a binder material for removably adhering the opaque particulate material and the microcapsules when the composition is applied to and dried on the substrate; and

(d) a solvent for the binder that does not dissolve the capsule walls of the microcapsules, the solvent being evaporable after application of the coating to the substrate.

2. The composition of claim 1 wherein the opaque particulate material and the microcapsules are uniformly dispersed in the binder.

3. The composition of Claim 1 wherein the opaque particulate material is selected from the group consisting of carbon black, aluminum powder, brass powder, copper powder, microsized nylon particles and mixtures thereof.

4. The composition of Claim 3 wherein the opaque particulate material is brass powder.

5. The composition of Claim 1 wherein the fragrant material is a fragrance slurry.

6. The composition of Claim 5 wherein the fragrance slurry comprises perfume.

7. The composition of claim 1 wherein the microcapsules comprise a cross-linked resin outer wall.

8. The composition of Claim 1 wherein the microcapsules comprise an outer wall made from prepolymers selected from the group consisting of aminoplast prepolymers and urea-aldehyde prepolymers, and mixtures thereof.

9. The composition of Claim 1 wherein the microcapsules comprise an outer wall made from aminoplast prepolymers, capable of forming resins selected from the group consisting of melamine, epoxy, thiourea, polyamide, dicyanodiamide-aldehyde, and mixtures thereof.

10. The composition of Claim 1 wherein the microcapsules have an average diameter in the range of 5 to 20 micrometers.

11. The composition of Claim 1 wherein the binder is selected from the group consisting of waxes, latex elastomers, low molecular weight polyethylenes and mixtures thereof.

12. The composition of Claim 1 wherein the solvent is non-polar.

13. The composition of Claim 1 wherein the solvent is an organic solvent.

14. The composition of Claim 1 wherein the microcapsules are present in the composition in a range of from about 5% to 70% by weight of the total composition.

15. The composition of Claim 14 wherein the microcapsules are present in the composition in a range of from about 10% to 25% by weight of the total composition.

16. An opaque, abrasive removable coating on a substrate, that releases a fragrance when removed, the coating comprising:

(a) opaque particulate material;

(b) microcapsules composed of a rupturable capsule wall having a fragrant material contained therein;

(c) a binder material being removably adhered to the substrate with the opaque particulate material and the microcapsules dispersed within the binder; and

(d) the opaque material being present in sufficient amount to provide a desired degree of opacity.

17. The coating of Claim 16 wherein the thickness of the coating is at least one and one-half times the average diameter of the microcapsules.

18. The coating of Claim 16 wherein the average diameter of the microcapsules is in the range of about 10 to about 20 micrometers.

19. An indicia-bearing article with at least a portion of the indicia concealed by an opaque, abrasive removable fragrance releasing coating, the article comprising:

(a) an indicia-bearing surface;

(b) an opaque, abrasive removable fragrance releasing coating for concealing at least a portion of the indicia, the coating comprising a binder containing opaque particulate material and microcapsules composed of a rupturable capsule wall with a fragrant substance contained therein.

20. The article of Claim 19 wherein the indicia bearing surface is a paper product.

21. The article of Claim 19 wherein the thickness of the coating is at least about one and one-half times the average diameter of the microcapsules.

22. The article of Claim 19 wherein the average diameter of the microcapsules is in the range of 10 to 20 micrometers.

23. A method of making a composition suitable for making an opaque, abrasive removable fragrance releasing coating on a substrate, the method comprising the steps of:

(a) encapsulating fragrant material in microcapsules by forming an aqueous suspension of the fragrant material to form a rupturable shell around and encapsulating the fragrant material, the fragrance being released when the microcapsules are ruptured;

(b) separating the microcapsules from the suspension; and

(c) mixing, in a manner that avoids rupturing the microcapsules, opaque particulate material, the separated microcapsules, a binder material for adhering the opaque particulate material and the microcapsules to the substrate, and a solvent for the binder compatible with both the opaque particulate material and the microcapsules which does not dissolve the wall of said microcapsules.

24. The method of Claim 23 wherein the encapsulating step is carried out by an interfacial deposition process.

25. The method of Claim 23 wherein the encapsulating step is carried by an interfacial polycondensation process.

26. The method of Claim 23 wherein the fragrant material is dispersed in an aqueous solution to an average droplet size in the range of one micrometer to two thousand micrometers.

27. The method of Claim 25 wherein the average droplet size is in the range of five to twenty micrometers.

28. A method of releasing a fragrance while revealing a message on a substrate, comprising the step of:

(a) providing an opaque, abrasive removable, fragrance releasing coating over at least a portion of a message on the substrate, the coating comprising a binder layer that adheres to the substrate and is abrasive removable, said binder containing opaque particulate material and microcapsules having a rupturable capsule wall and a fragrant sub-·stance contained therein;

(b) abrading the coating to remove at least a portion of the coating from the substrate to reveal the message, while rupturing at least some of the microcapsule walls to release the fragrance.

29. A method for producing an indicia-bearing article with at least a portion of the indicia being concealed by an opaque, abrasive removable fragrance releasing coating, comprising the steps of:

(a) applying over the indicia a coating forming composition comprising a dispersion containing opaque particulate material, microcapsules composed of a rupturable capsule wall having a fragrant material contained therein, a binder for removably adhering the opaque particulate material and the microcapsules when the composition is applied to and dried on the article, and a solvent for the binder that is compatible with both the opaque particulate material and the microcapsules and which does not dissolve the walls of said microcapsules; and

(b) evaporating the solvent from the composition after application to the article.

30. The process of Claim 28 wherein the coating is applied to a continuously running web of indicia-bearing articles.

31. The process of Claim 29 wherein the solvent is evaporated before individual articles are cut from the continuous web.

FIG 1

FIG 2

FIG 3